(19) Europäisches Patentamt
European Patent Office
Office européen des brevets

(11) **EP 4 552 860 B1**

(12) **EUROPEAN PATENT SPECIFICATION**

(45) Date of publication and mention
of the grant of the patent:
**20.05.2026 Bulletin 2026/21**

(21) Application number: **23835291.8**

(22) Date of filing: **20.06.2023**

(51) International Patent Classification (IPC):
**B60C 9/20** *(2006.01)*    **B29D 30/44** *(2006.01)*
**B60C 9/18** *(2006.01)*

(52) Cooperative Patent Classification (CPC):
**B29D 30/44; B29D 30/70; B60C 9/185;**
**B60C 9/2006;** B60C 9/2009; B60C 2009/1842;
B60C 2009/1864; B60C 2009/2067;
B60C 2009/2083

(86) International application number:
**PCT/JP2023/022785**

(87) International publication number:
**WO 2024/009757 (11.01.2024 Gazette 2024/02)**

(54) **PNEUMATIC TIRE AND PRODUCTION METHOD THEREFOR**

LUFTREIFEN UND HERSTELLUNGSVERFAHREN DAFÜR

PNEUMATIQUE ET PROCÉDÉ DE PRODUCTION ASSOCIÉ

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **06.07.2022 JP 2022109348**
**07.11.2022 JP 2022178444**

(43) Date of publication of application:
**14.05.2025 Bulletin 2025/20**

(73) Proprietor: **BRIDGESTONE CORPORATION**
**Chuo-ku**
**Tokyo 104-8340 (JP)**

(72) Inventor: **TAKAHASHI Ryota**
**Tokyo 104-8340 (JP)**

(74) Representative: **Marks & Clerk LLP**
**15 Fetter Lane**
**London EC4A 1BW (GB)**

(56) References cited:
JP-A- 2007 302 203    JP-A- 2008 174 135
JP-A- H0 655 905      JP-A- H05 319 016
JP-A- S63 103 705

**Description**

TECHNICAL FIELD

This invention relates to a pneumatic tire and a method of producing the same.

BACKGROUND

In a current manner, a belt generally used as a reinforcement member of a pneumatic tire is made up by using two or more belt layers consisting mainly of a rubber-coated steel cord layer inclined to a tire equatorial plane in such a way that steel cords in the belt layers are intersect with each other.

In recent years, for the purpose of enhancing the fuel efficiency of automobiles, there has been an increased need for reducing the rolling resistance of a tire. Examples of means for providing a tire with low rolling resistance include weight reduction of tire members, particularly, weight reduction in a belt layer. For example, in PTL 1, the weight reduction is achieved by employing a bundle of codes of monofilaments. In addition, a spacing between rubber layers between monofilament cords of the first belt layer and the second belt layer at an end of the second belt layer is set to be greater than a spacing between rubber layers between monofilament cords of the first belt layer and the second belt layer in the tire center portion. As a result, the belt edge separation (peeling-off of the belt end) can be suppressed to satisfy both of the light weight and the durability

CITATION LIST

Patent Literature

PTL 1: JP2010-163055A

PTL 2: JP2007302203A which aims to provide a pneumatic tire suppressing generation of belt edge separation while accomplishing light weight of a tire weight and making light weight of a tire and durability of a belt compatible to a high degree. This is achieved by a first belt layer of first layer of the belt and a second belt layer of second layer are arranged in a belt width direction in parallel and are buried in a coating rubber making a bundle that 5-7 mono-filament cords having a filament diameter of 0.18-0.26 mm are aligned as a unit. Further, a gauge of the rubber layer between the first belt layer at the second belt layer end and the mono-filament cord of the second belt layer is 1.3-3.0 times the gauge at a central part of the tire.

PTL 3: JP2008174135A which aims to provide a pneumatic tire that is superior in durability and productivity. This is provided by with a tread; a bead; a carcass; a belt; a pair of first reinforcement layers; and a pair of second reinforcement layers positioned at an outer side in a radial direction of the first reinforcement layers. The belt is provided with a first ply provided with a first cord; and a second ply provided with a second cord. The first reinforcement layer is positioned at the outer side in a radial direction of the first ply. The second reinforcement layer is positioned between the first reinforcement layer and the second ply. The first reinforcement layer includes a short fiber oriented so as to be crossed to the first cord. The second reinforcement layer includes a short fiber oriented so as to be crossed to the second cord. An absolute value of an oriented angle of these short fibers is 45° to 90°.

SUMMARY

(Technical Problem)

However, there still has been a need for improving the durability of a tire, particularly the durability of a belt end. Therefore, there has been a need for a tire having high durability and low rolling resistance at a further higher level.

In addition, in the configuration having two or more belt layers as described above, it is also important to prevent the formation of a gap (air reservoir) at a belt end in producing a tire.

Accordingly, it could be helpful to provide a pneumatic tire having reduced rolling resistance and good durability at a belt end in order to solve the problem of the above conventional art.

In addition, it could be helpful to provide a method of producing a pneumatic tire by which the above-described pneumatic tire can be produced while suppressing the formation of a gap at a belt end.

(Solution to Problem)

For the purpose of solving the above-described problem, we provide:

[1] A pneumatic tire according to appended claim 1.
[2] The pneumatic tire according to [1], in which when lengths of the rubber portion A, the rubber portion B and the rubber portion C in a direction toward a tire center portion are defined as $L_A$, $L_B$ and $L_C$, respectively, $L_A/L_B$ is 0.5 or less and $L_C/L_B$ is 0.5 or less.
[3] The pneumatic tire in which both of a distance between interface-cord of the first belt layer and a distance between interface-cord of the second belt layer in a tire center portion are 0.14 mm or less.
[4] The pneumatic tire according to any one of [1] to [3], in which cords in the first belt layer and the second belt layer have a 1×N structure (N is an integer selected from 2 to 6) obtained by twisting N filaments together.
[5] the pneumatic tire according to [4], in which an end count of the cord is 60/dm or more and 95/dm or less.
[6] The pneumatic tire according to [4] or [5], in which a diameter of the cord is 0.5 mm or more and 1.0 mm or less.
[7] The pneumatic tire according to any one of [1] to [3], in which cords in the first belt layer and the second belt layer is of monofilaments that are not twisted together and aligned in parallel.
[8] the pneumatic tire according to [7], in which an end count of the cord is 180/dm or more and 240/dm or less.
[9] The pneumatic tire according to [7] or [8], in which a diameter of the cord is 0.24 mm or more and 0.28 mm.
[10] The pneumatic tire according to any one of [1] to [9], in which filaments constituting cords in the first belt layer and the second belt layer are classified into the UT grade defined in ISO 17832: 2009.
[11] The method of producing a pneumatic tire according to any one of [1] to [10], including a step of laminating the first belt layer and the second belt layer, in which
prior to the laminating step, an end the first belt layer is covered with a first rubber sheet and an end of the second belt layer is covered with a second rubber sheet, and in doing so, both of the first rubber sheet and the second rubber sheet asymmetrically covers respective ends of the belt layers in such a way that a length of a rubber sheet portion positioned on a side facing the other belt layer when the laminating is performed is longer than a length of a rubber sheet portion positioned on the opposite side.
[12] The method of producing a pneumatic tire according to [11], in which an end of the first rubber sheet positioned between the first belt layer and the second belt layer and an end of the second rubber sheet do not overlap with each other when the first belt layer and the second belt layer are laminated.

(Advantageous Effect)

According to this invention, it is possible to provide a pneumatic tire having reduced rolling resistance and good durability at a belt end.
In addition, according to this invention, it is possible to provide a method of producing a pneumatic tire by which the above-described pneumatic tire can be produced while suppressing the formation of a gap at a belt end.

BRIEF DESCRIPTION OF THE DRAWINGS

In the accompanying drawings:

FIG. 1 is a schematic half cross-sectional view of a pneumatic tire according to one of the embodiments;
Fig. 2A is a schematic cross-sectional view of an end of a belt in a pneumatic tire according to one of the embodiments;
Fig. 2B is a schematic cross-sectional view of an end of a belt in a pneumatic tire according to another embodiment;
Fig. 3 is a schematic cross-sectional view of a tire center portion and end of a belt in a pneumatic tire according to one of the embodiments;
Fig. 4 is a schematic cross-sectional view of a tire center portion of a belt in a pneumatic tire according to one of the embodiments;
Fig. 5A is a schematic view partially illustrating a method of producing a pneumatic tire according to one of the embodiments;
Fig. 5B is a schematic cross-sectional view of an end of a belt in a pneumatic tire obtained by the production method of Fig. 5A;
Fig. 6A is a schematic view partially illustrating a comparative method of producing a pneumatic tire; and
Fig. 6B is a schematic cross-sectional view of an end of a belt in a pneumatic tire obtained by the production method of Fig. 6A.

DETAILED DESCRIPTION

(Pneumatic tire)

a pneumatic tire will be described below in detail with reference to the drawings.

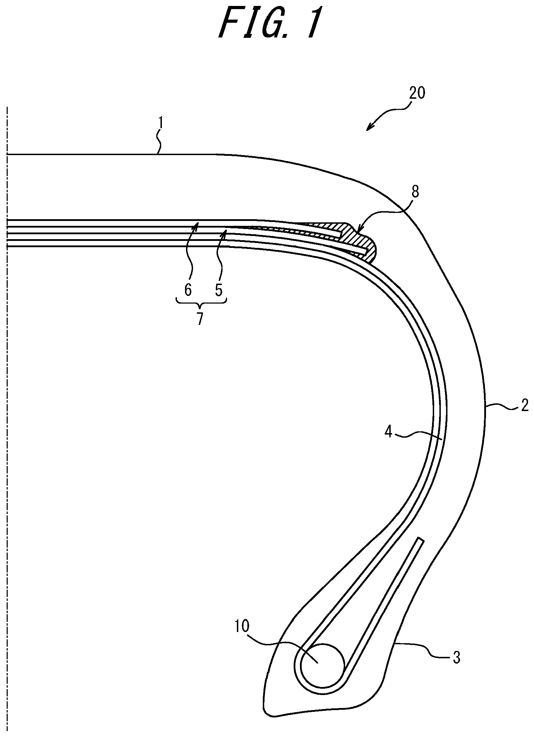

Fig. 1 is a schematic half cross-sectional view of a pneumatic tire (hereinafter, may be merely referred to as "tire") according to one of the embodiments (hereinafter, may be referred to as "the present embodiment"). In the tire 20 of Fig. 1, a tread portion 1, a sidewall portion 2 and a bead portion 3 are reinforced by a carcass 4 consisting of one carcass layer toroidally extending from one bead portion 3 to the other bead portion 3. In addition, the tread portion 1 is reinforced by a belt 7 including a belt layer made consisting of at least two layers (in Fig. 1, the first belt layer 5 and the second belt layer 6) disposed on a tire radially outer side of a crown region of the carcass 4. In this regard, a plurality of carcass layers of the carcass 4 can be present in the tire 20.

In the tire 20, a first belt layer 5 is disposed on a tire radially outer side of a crown region of the carcass 4, and a second belt layer 6 is disposed on a tire radially outer side of the first belt layer 5. As illustrated in Fig. 1, the belt width of the second belt layer 6 (the length in a tire width direction) is generally smaller than that of the first belt layer 5. The first belt layer 5 and the second belt layer 6 are successively laminated to constitute a belt 7. In this regard, in the illustrated example, the belt 7 consists of two belt layers 5 and 6 but the belt 7 can consist of three or more belt layers.

In the tire 20 according to the present embodiment, the thickness of the first belt layer 5 and the thickness of the second belt layer 6 in a tire center portion is 1.00 mm or less. As described above, by setting the thickness of each of the belt layers in a tire center portion to be 1.00 mm or less, the weight reduction can be achieved and the rolling resistance can be reduced. From a similar standpoint, the thickness of the first belt layer 5 in a tire center portion is preferably 0.90 mm or less. In addition, the thickness of the second belt layer 6 in a tire center portion is preferably 0.90 mm or less. For the purpose of achieving such a thickness, it is possible to select the diameters of the cords 5A and 6A embedded in the first belt layer and the second belt layer and the coating thickness of the coating rubbers 5B and 6B suitably.

In this regard, the tire center portion represents portions located within a distance of one-fourth of a tire ground-contact width from a tire equatorial plane in a tire width direction.

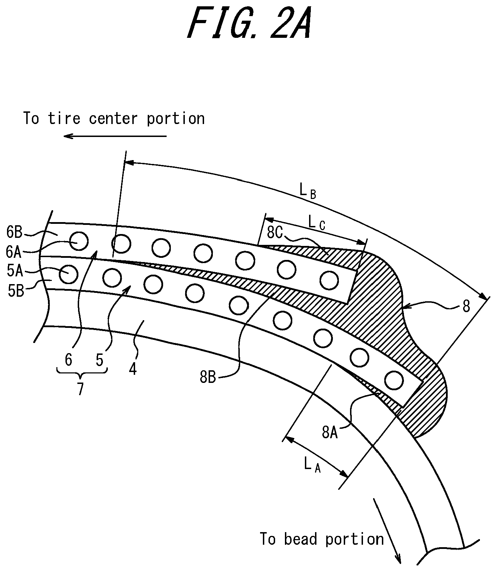

Fig. 2A illustrates a schematic cross-sectional view of an end of a belt 7 in a tire 20 according to the present embodiment (an end of a tire width direction. The same shall apply hereinafter.). As illustrated, the first belt layer 5 and the second belt layer 6 is made up by embedding a plurality of cords (5A and 6A) in coating rubbers (5B and 6B). More generally, the belt layers 5 and 6 consist of rubber-steel hybrid cords in which steel cords (cords 5A and 6A) aligned in parallel is coated with coating rubbers (5B and 6B).

As illustrated, an end rubber 8 is disposed at an end of the belt 7 of the tire 20 according to the present embodiment. More specifically, the rubber (end rubber) 8 is disposed at least on a tire radially inner side of the first belt layer 5, between the first belt layer 5 and the second belt layer 6, and a tire radially outer side of the second belt layer 6. By disposing the end rubber 8 at an end of the belt 7 in such a manner, the durability at the belt end can be improved. In this regard, the rubber on a tire radially inner side of the first belt layer 5 can be combined with a member disposed in a tire radially inner side to a further extent (for example, the carcass 4) to improve the durability. The rubber on a tire radially outer side of the second belt layer 6 can be combined with a member that can be disposed in a tire outer side to a further extent (for example, the belt reinforcement layer) to improve the durability.

Furthermore, as illustrated, in the tire 20 according to the present embodiment, when an end rubber positioned on a tire radially inner side of the first belt layer 5 is defined as a rubber portion A (8A), an end rubber positioned between the first belt layer 5 and the second belt layer 6 is defined as a rubber portion B (8B), and an end rubber position on a tire radially outer side of the second belt layer 6 is defined as a rubber portion C (8C), the rubber B (8B) is defined as having the longest length in a direction toward a tire center portion (generally synonymous with "the length in a tire width direction"). In other words, in the tire 20 according to the present embodiment, when lengths of the rubber portion A (8A), the rubber portion B (8B) and the rubber portion C (8C) in a direction toward a tire center portion are defined as $L_A$, $L_B$ and $L_C$ (see Fig. 2A) respectively, and $L_A/L_B$ is less than 1.0 and $L_C/L_B$ is less than 1.0. Furthermore, in the tire 20 according to the present embodiment, as illustrated, among the rubber portion A (8A), the rubber portion B (8B) and the rubber portion C (8C), the rubber portion B (8B) is closest to a tire center portion.

In this regard, an aspect of the above-described end rubber 8 can be typically accomplished by producing a tire according to a method of producing a pneumatic tire described below. In a method of producing a pneumatic tire, as described below, a gap tends not to be formed between the first belt layer 5 and the second belt layer 6 and between the second belt layer 6 and a layer (for example, the belt reinforcement layer) that can be disposed on the outer side of the second belt layer 6. This also contributes to the enhancement in the durability at a belt end.

In the tire 20 according to the present embodiment, it is preferable that $L_A/L_B$ be 0.5 or less and $L_C/L_B$ be 0.5 or less. In this case, the formation of a gap at the belt end is further suppressed. From a similar standpoint, $L_A/L_B$ is more preferably 0.4 or less, In addition, $L_C/L_B$ is more preferably 0.4 or less.

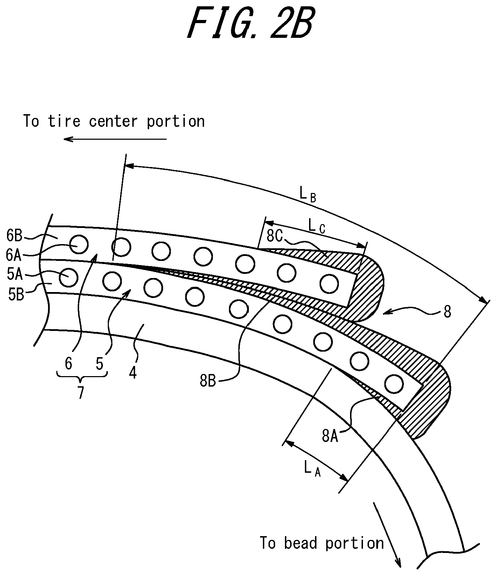

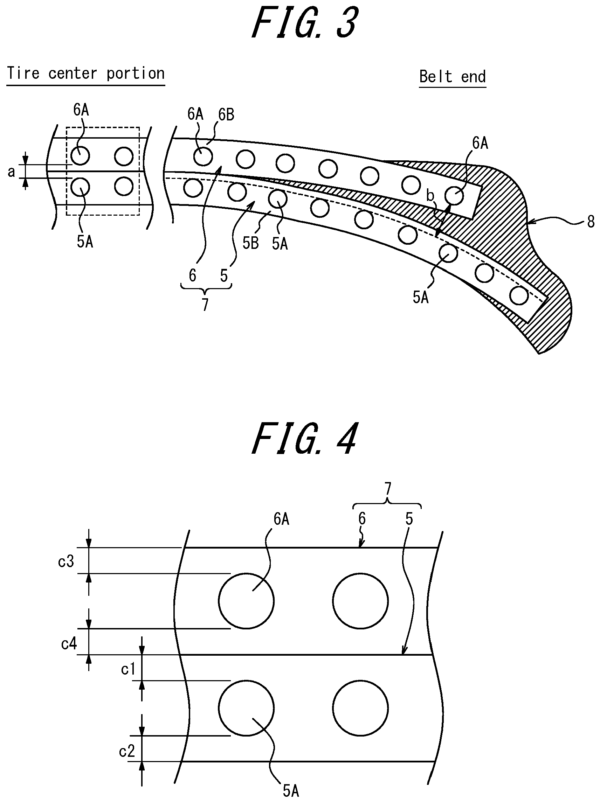

In this regard, in a tire of Fig. 2A (and Figs. 1 and 3), the rubber portion A, the rubber portion B and the rubber portion C are integrated with the end rubber 8 and disposed at an end of the belt 7 but such an integration is optional. For example, in a tire, a rubber on a tire radially inner side of the first belt layer 5 (a rubber portion A), a rubber between the first belt layer 5 and the second belt layer 6 (a rubber portion B), and a rubber on a tire radially outer side of the second belt layer 6 (a rubber portion C) can be disposed to be separated from each other. In a tire, as illustrated in Fig. 2B, an end rubber 8 (a rubber sheet) covering an end of the first belt layer 5 can be in contact with (and not fully integrated with) an end rubber 8 (a rubber sheet) covering an end of the second belt layer 6.

In this regard, for the purpose of further improving the durability at a belt end, the rubber portion A, the rubber portion B and the rubber portion C are preferably integrated with the end rubber 8.

Fig. 3 is a schematic cross-sectional view of a tire center portion and an end of a belt 7 in the tire 20 according to the present embodiment. In this regard, an end of the belt 7 in Fig. 3 corresponds to that illustrated in Fig. 2A. In the tire 20 according to the present embodiment, as illustrated, the shortest distance between a cord 6A of the second belt layer 6 and a cord 5A of the first belt layer 5 in a tire center portion is defined as a and the shortest distance between a cord 6A closest to an end of the second belt layer 6 and a cord 5A of the first belt layer 5 is defined as b, b/a is 1.8 or more and 4.0 or less. As described above, a strain that may cause belt edge separation can be suppressed by increasing the spacing between the cords of the first belt layer 5 and the second belt layer 6 at the belt end. In the tire 20 of the present embodiment, the durability at a belt end, particularly the belt edge separation durability can be improved by setting b/a to be 1.8 or more. In addition, sufficient low rolling resistance desired for a tire can be ensured by setting b/a to be 4.0 or less. From a similar standpoint, b/a is preferably 1.95 or more, preferably 2.00 or more, In addition, preferably 3.90 or less.

In this regard, "the shortest distance b between the cord closest to an end of the second belt layer and the cord of the first belt layer" shall substantially represent the shortest distance between a cord closest to an end of the second belt layer and a tangent line (the dashed lined in Fig. 3) of a plurality of cords aligned in the first belt layer.

Fig. 4 is a schematic cross-sectional view of a center portion of a belt 7 in the tire 20 according to the present embodiment, which is the portion enclosed by the dashed line in Fig. 3. In the tire 20 according to the present embodiment, any distance between interface-cord 5A of the first belt layer 5 in a tire center portion (that is, the distance c1 from the top surface to cord 5A and the distance c2 the bottom surface to the cord 5A) is 0.14 mm or less. Any distance of interface-cord 6A of the second belt layer 6 in a tire center portion (that is, the distance c3 from the top surface to the cord 6A and the distance c4 from the bottom surface to the cord 6A) is preferably 0.14 mm or less. By employing such an aspect, the low rolling resistance of the tire 20 can be further sufficiently improved. From a similar standpoint, a distance between interface-cord 5A of the first belt layer 5 and a distance between interface-cord 6A of the second belt layer 6 in a tire center portion is more preferably 0.13 mm or less, and further preferably 0.12 mm or less.

In this regard, as can be seen from Fig. 3 and Fig. 4, the distance illustrated in Fig. 3 is the distance (c4 + c1) illustrated in Fig. 4.

There is no particular limitation regarding the specific structure and materials of a tire of this invention as long as the matters regarding the belt 7 are as described above.

For example, the first belt layer 5 and the second belt layer 6 can be disposed in such a way that a plurality of cords embedded in the coating rubber are inclined in relation to a tire circumferential direction at an angle of, for example, 15 to 40°.

In addition, an organic fiber cord extending , for example, at an angle of 70 to 90° in a direction substantially orthogonal to a tire circumferential direction can be used in the carcass 4.

In addition, the tire may include belt reinforcement layer (also referred to as cap layer) on the tire radially outer side of the belt 7.

In addition, the tire 20 illustrated has a structure in which bead cores 10 are embedded in a pair of bead portion 3, respectively, and the carcass 4 is locked by folding the carcass 4 from the tire inner side toward tire outer side around the bead core 10. However, the tire 20 illustrated can have a structure (not illustrated) in which the carcass 4 is locked by wounding the carcass 4 around the bead core 10. In addition, the tire 20 illustrated can have a structure (not illustrated) in which the carcass 4 is locked by sandwiching the carcass 4 from both sides with a bead wire.

In addition, in a tire, a tread pattern can be formed on a surface of the tread portion 1.

In addition, in a tire, an inner liner (not illustrated) can be formed on the innermost layer.

In addition, as a gas to be filled in a tire, it is possible to use normal air or air with changed partial pressure of oxygen, or an inert gas such as nitrogen.

In this regard, a tire is suitable for a pneumatic tire for use in passenger vehicle.

Now, members used in a tire 20 of the present embodiment will be described in detail.

In this regard, the compound described in this description can be partially or entirely derived from a fossil resource, derived from a biological resource such as a plant resource, or derived from a recycled resource such as a used tire. In addition, the compound described in this description can be a mixture of any two or more of a fossil resource, a biological resource, and a recycled resource.

(Coating rubber)

There is no particular limitation regarding the coating rubbers 5B and 6B used in the first belt layer and the second belt layer as long as the coating rubbers are of a commonly used rubber composition that can cover the cords 5A and 6A. Examples of the rubber component include diene-based rubbers, and in particular, a natural rubber or an isoprene rubber is preferable. In addition, a filler such as carbon black can be formulated into the above coating rubbers 5B and 6B as long as the filler does not affect the performance as a coating rubber such as adhesiveness and durability. As the above carbon black, a carbon black of HAF class is preferable. In addition, the content of carbon black in the coating rubbers 5B and 6B can be 50 to 70 parts by mass based on 100 parts by mass of rubber component. In addition, in addition to the above-described components, the above coating rubbers 5B and 6B can contain, for example, a cross-linking agent such as a vulcanization accelerator, sulfur and zinc oxide; an adhesion promoter such as a cobalt compound including an cobalt salt; an anti-aging agent; an oil; and a resin, as appropriate. Examples of the above anti-aging agent include amine-based anti-aging agents such as 6PPD and bisphenol-based anti-aging agents such as o-MBp14. These anti-aging agents can be used alone or can be used in combination of two or more.

(End rubber)

The end rubber 8 (the rubber portion A, the rubber portion B and the rubber portion C) is not limited in particular but, for example, the same rubber composition as in the coating rubbers 5B and 6B of the first belt layer 5 and the second belt layer 6 can be used.

(Cord)

In the first belt layer 5 and the second belt layer 6, a plurality of cords 5A and 6A are typically aligned in parallel. Such cords 5A and 6A are generally steel cords. In addition, there is no particular limitation regarding the structure of such cords. In this regard, for the purpose of effectively satisfying both of improvement in the durability of a tire and low rolling resistance, the cord preferably has a $1 \times N$ structure (N is an integer selected from 2 to 6) obtained by twisting N filaments together. In particular, in a tire with a tire load index of less than 100, the above cord more preferably has $1 \times 2$ structure, and in a tire with a tire load index of 100 or more, the above cord more preferably has a $1 \times 5$ structure. In addition, From a similar standpoint, it is also preferable that the cord be of monofilaments that are not twisted together and aligned in parallel. In addition, in the above $1 \times N$ structure, the cord can have a $1 \times N$ open structure in which filaments are not in contact with each other and twisted together with a spacing from one another. The cord having an open structure has better fatigue resistance than that of a cord in which filaments are twisted together with the filaments being in contact with each other.
In this regard, a cord having a $1 \times N$ open structure can be formed sandwiching an unvulcanized rubber between the filaments and twisting them together, or can be formed by covering the surfaces of the filaments with an unvulcanized rubber and subsequently twisting them together.
In addition, such filaments can be patterned in advance and subsequently twisted together. When the filaments are patterned in advance, the patterning pitch of the filament is preferably in a range of 8 mm or more to 16 mm or less. The patterning pitch in this range can enhance the rubber permeation ability to improve the durability further.
In addition, the ratio Sf/Sc of the cross-sectional area Sf of the filament in the cross section of the cord to the area Sc of the circumscribed circle of the cross-section of the cord is preferably in a range of 0.4 or more to 0.7 or less. Sf/Sc in this range can enhance the rubber permeation ability to improve the durability further.
In addition, surfaces of the filaments constituting the cords 5A and 6A in the drawing can be surface-treated. In this case, the phosphoric acid amount of the surface of the surface-treated filament is preferably 2.0 mg/m$^2$ or less. When the phosphoric acid amount of the surface of the filament is 2.0 mg/m$^2$ or less, the adhesiveness between the filament and the coating rubber is good.
The filaments constituting cords 5A and 6A used in the first belt layer 5 and the second belt layer 6 are preferably classified into the ST grade (super tensile strength cord) or UT grade (ultra tensile strength cord) defined in ISO 17832: 2009, in particular, and is preferably classified into the UT grade. In this case, it is possible to effectively satisfy both of improvement in the durability of a tire and low rolling resistance.
From a similar standpoint, when the diameters of the filaments constituting the cord is X (mm) and the tensile strength of the filaments is Y (MPa), the above cords 5A and 6A preferably satisfies the following formula (1):

$$4250 - 2000X \leqq Y \leqq 4500 - 2000X \quad (1).$$

In the filaments constituting the above cords 5A and 6A, from a standpoint of fatigue resistance, the hardness of the surface layer is preferably 90 to 110%, more preferably 100% based on the hardness of the inner layer. Here, the surface layer of the filament means a layer (region) deeper than 0.01 mm from the outermost layer of the filament, and the inner layer of the filament means a layer (region) on the inner side of the above surface layer. The above hardness can be measured as, for example, Vickers hardness. In addition, the hardness of the surface layer of the filament can be measured at a position deeper than 0.005 mm from the outermost layer of the filament, and the hardness of the inner layer of the filament can be measured in a region deeper than 0.04 mm from the outermost layer of the filament.

The method of producing filaments constituting the above cords 5A and 6A is not limited in particular. The above filament can be obtained, for example, by refining and drawing iron ore, by refining and drawing waste iron scrap, or by recycling steel removed from a tire.

In the first belt layer 5 and the second belt layer 6, the end count of cords 5A and 6A is preferably 50/dm or more and 250/dm or less. In this case, both of improvement in the durability and the low rolling resistance of a tire can be effectively achieved. In particular, when the above cord has a 1×N structure (N is an integer selected from 2 to 6), the end count of the cords is preferably 60/dm or more and 95/dm or less. When the above cord is of monofilaments, the end count of the cord is preferably 180/dm or more and 240/dm or less.

The diameters of the cords 5A and 6A used in the first belt layer 5 and the second belt layer 6 are preferably 0.2 mm or more and 1.2 mm or less. In this case, the improvement in both of the durability and low rolling resistance of a tire can be effectively achieved. In particular, when the above cord has a 1×N structure (N is an integer selected from 2 to 6), the diameter of the cord is preferably 0.4 mm or more and 1.2 mm or less, and further preferably 0.5 mm or more and 1.0 mm or less. When the above cord is of monofilaments, the diameter of the cord is preferably 0.24 mm or more and 0.28 mm or less.

(Belt reinforcement layer)

As described above, the tire 20 can include a belt reinforcement layer (also referred to as cap layer) on a tire radially outer side of the belt 7. The belt reinforcement layer is a member obtained by coating organic fiber cords (reinforcement materials) arranged substantially parallel to a tire circumferential direction (for example, at angle of 0 to 5° in relation to a tire circumferential direction) with a rubber (elastomer). The belt reinforcement layer can be formed by obtaining a narrow strip by coating an organic fiber cord with an elastomer and spirally winding the strip in a tire circumferential direction in a continuous manner.

As the organic fiber cord employed in the belt reinforcement layer, an organic fiber cord having a strength at break of 6.5 cN/dtex or more, an elongation at break of 10% or more and an elastic modulus at a 7% elongation of 6.0 mN/(dtex·%) or more is preferable. Here, the above strength at break, elongation at break and elastic modulus at a 7% elongation are values measured at a room temperature (23°C), and the properties of the organic fiber cord can be measured according to JIS L 1013 "Testing methods for man-made filament yarns".
the elastic modulus at a 7% elongation is calculated
by converting the slope of the tangent line (N/%) at a point corresponding to a load-elongation curve of a 7% elongation of the cord into a value per 1 dtex.

The organic fiber cord having a strength at break of 6.5 cN/dtex or more, an elongation at break of 10% or more and an elastic modulus at a 7% elongation of 6.0 mN/(dtex·%) or more has a high strength at break, a high elongation at break and high an elastic modulus at a 7% elongation. Therefore, by applying an organic fiber cord having such properties to the belt reinforcement layer to supplement the rigidity of the belt 7, for example, it is possible to improve the steering stability of a tire while suppressing the decrease in the plunger durability resulted from the application of a belt layer including metal monofilaments.

Materials of organic fiber cord are not limited in particular, but examples of such materials include polyesters such as polyethylene terephthalate (PET) and polyethylene naphthalate (PEN); nylons such as 6-nylon, 6,6-nylon and 4,6-nylon; and celluloses rayon and lyocell. Among these, polyethylene terephthalate is preferable. That is, an organic fiber cord as a reinforcement material for a belt reinforcement layer is preferably a cord consisting of a polyethylene terephthalate (hereinafter, may be merely referred to as "polyethylene terephthalate cord"). The polyethylene terephthalate cord has higher rigidity than that of a commonly used nylon cord, and has a strong effect of enhancing the plunger durability and the steering stability of a tire.

The organic fiber cord preferably has an elastic modulus of 2.5 mN/(dtex·%) or more measured at 160°C under a load of 29.4 N. Here, the elastic modulus measured at 160°C under a load of 29.4 N is calculated by converting the slope of the tangent line (N/%) at a point of a load of 29.4 N on a load-elongation curve of the cord measured at 160°C into a value per 1 dtex.

In this regard, the reason for measuring the elastic modulus at 160°C is because the temperature of the interior of a tire becomes higher as high speed running continues, and at the time point where a tire failure during high speed running occurs, the temperature of the belt reinforcement layer is at 160°C. In particular, a polyethylene terephthalate cord has largely decreased elastic modulus at a high temperature when compared to the elastic modulus at a room temperature. Even if such cord is a highly elastic cord at a room temperature, when the cord is not able to maintain a high elastic modulus at a high temperature, sufficient belt reinforcement effect (the effect of enhancing the durability against projection input and the effect of suppressing the projection of the belt) cannot be provided. Therefore, the elastic modulus at a high temperature is of great importance. By setting the elastic modulus of the cord under a load of 29.4 N measured at 160°C to be 2.5 mN/(dtex·%) or more, the plunger durability of a tire can be improved, and also, the projection amount of a belt in high speed running can be suppressed, and the stress in the stepping-in and stepping-out of a tire is reduced to enhance the steering stability of a tire in high speed running.

For the purpose of improving the elastic modulus of the organic fiber cord at 160°C, it is preferable to perform dipping treatment under high tension. In addition, for the purpose of providing the cord with sufficiently high elasticity, the tension in the adhesive treatment of cord is preferably $6.9 \times 10^{-2}$ N/tex or more. In this regard, the method of providing the cord with high elasticity is not limited to the above-described method and other methods such as reduction in the twist count of the cord can also be employed. The adhesive treatment is composed of dry treatment, hot treatment, normalizing treatment, and the like, and is of treatment that adjust the temperature and the time in addition to the tension as appropriate. The adhesive treatment can be performed as any of one-bath treatment and two-bath treatment but is preferably performed as two-bath treatment, and it is preferable that a tension of $6.9 \times 10^{-2}$ N/tex or more be applied to the cord in the two-bath hot treatment.

In the organic fiber cord, a twist coefficient $\alpha$ represented by the following formula:

$$\alpha = T \times D 1/2$$

(wherein, $\alpha$ represents a twist coefficient, T represents a twist count (twists/100 mm), and D represents a total fineness (dtex) of the cord) is preferably 500 to 2500. When the twist coefficient $\alpha$ of the organic fiber cord is 500 or more, the binding force of the filament is strong and sufficient adhesion is provided. When the twist coefficient $\alpha$ of the organic fiber cord is 2500 or less, sufficient elastic modulus is provided to obtain the effect of enhancing the durability against projection input and the effect of suppressing the projection of the belt.

The organic fiber cord preferably has a total fineness of 1000 to 3500 dtex. When the total fineness of the cord is 1000 dtex or more,
sufficient elastic modulus is provided to obtain the effect of enhancing the durability against projection input and the effect of suppressing the projection of a belt. When the total fineness of the cord is 3500 dtex or less, a high end count can be achieved to ensure sufficient rigidity per unit width.

The materials of the above organic fiber cord is not limited in particular and can be derived from synthetic product, can be derived from living things, can be derived from a mechanically recycled product obtained by grinding, melting and respinning PET products such as pet bottles, and can be derived from a chemically recycled product obtained by depolymerizing and repolymerizing PET products such as pet bottles.

(Method of producing a pneumatic tire)

The method of producing a pneumatic tire according to one of the embodiments (hereinafter, may be merely referred to as "production method") is a method for producing the above-described pneumatic tire 20 and includes a step of laminating the above a first belt layer 5 and the above second belt layer 6 (laminating step). In addition, in the production method according to the present embodiment, prior to the above laminating step, an end of the above first belt layer 5 is covered with a first rubber sheet 8 and an end of the above second belt layer 6 is covered with a second rubber sheet 8, and in doing so, both of the above a first rubber sheet 8 and the above second rubber sheet 8 asymmetrically covers respective ends of the belt layers in such a way that the length of the rubber sheet portion positioned on a side facing the other belt layer when the above laminating is performed is longer than the length of the rubber sheet portion positioned on the opposite side.

According to such a production method, it is possible to produce the above-described pneumatic tire 20 while effectively suppressing the formation of a gap between the first belt layer 5 and the second belt layer 6 and between the second belt layer 6 and a layer (for example, the belt reinforcement layer) that can be disposed on the outer side of the second belt layer 6.

The mechanism of suppressing the formation of a gap as described in the present embodiment will be described below in detail.

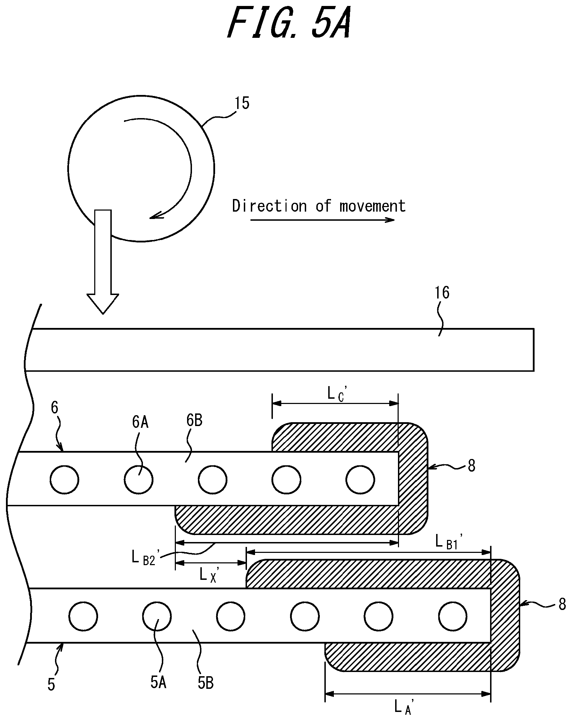

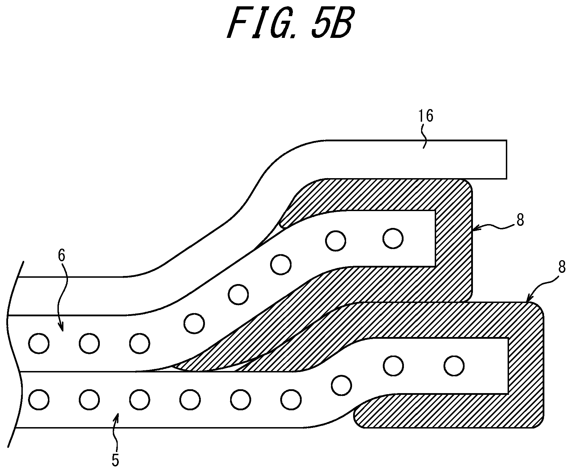

Fig. 5A is a schematic view illustrating a laminating step in the production method according to the present embodiment. As illustrated, in the laminating step, For example, in a state where a first belt layer 5, a second belt layer 6, and an additional layer 16 (such as a belt reinforcement layer, a rubber layer, and a pressure-bonding layer) are laminated in this order, a roll 15 is pressed from above onto these layers to move the layers from a tire center portion to a direction of an end of each of the layers. As a result, the first belt layer 5, the second belt layer 6, and the additional layer 16 are pressure-bonded. In doing so, an end of the first belt layer 5 is covered with a first rubber sheet 8 and an end of the second belt layer 6 is covered with a second rubber sheet 8 in advance. In this time, as illustrated in Fig. 5A, the first rubber sheet 8 covering an end of the first belt layer 5 asymmetrically covers an end of the first belt layer 5 in such a way that the length of the rubber sheet portion positioned on a side facing the second belt layer 6 when the layers are laminated (the length in a tire width direction. The same shall apply hereinafter) ($L_{B1}'$) is longer than the length of a rubber sheet portion positioned on the opposite side($L_A$'). In addition, as illustrated in Fig. 5A, the second rubber sheet 8 covering an end of the second belt layer 6 asymmetrically covers an end of the second belt layer 6 in such a way that a length ($L_{B2}$') of the rubber sheet portion positioned on a side facing the first belt layer 5 when the layers are laminated is longer than a length (Lc') of the rubber sheet portion positioned on the opposite side. By performing the laminating and pressure-bonding with such arrangement of the rubber sheet 8, at the belt end, as schematically illustrated in Fig. 5B, a gap tends not to be formed between the first belt layer 5 and the second belt layer 6, and between the second belt layer 6 and the additional layer 16.

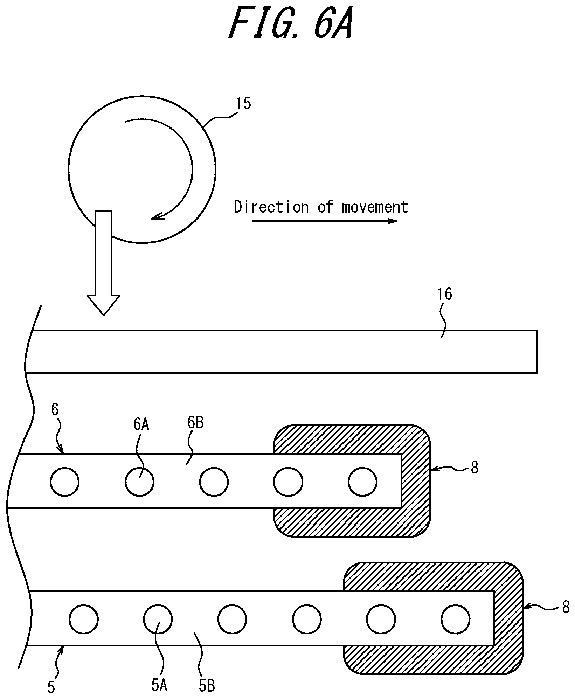

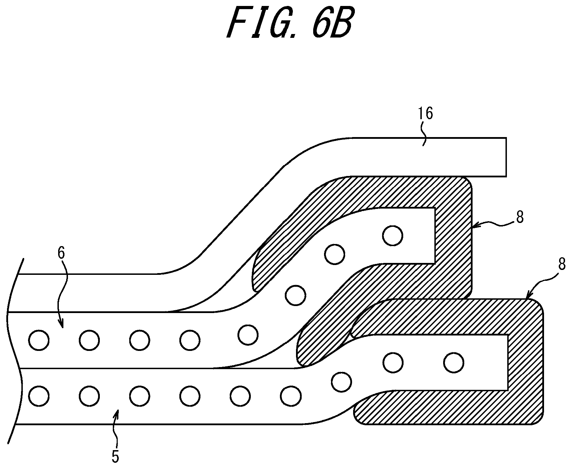

In a conventional manner, as illustrated in Fig. 6A, both of the first rubber sheet 8 covering an end of the first belt layer 5 and the second rubber sheet 8 covering an end of the second belt layer 6 symmetrically covers the respective ends with these ends being employed as the centers (that is, $L_A$' ≈ $L_{B1}$', $L_{B2}$' ≈ $L_C$'). When the laminating and pressure-bonding are performed in such an arrangement of the rubber sheet 8, the deformation cannot occur until the first belt layer 5, the second belt layer 6 and the additional layer 16 are tightly in contact with each other. As a result, as illustrated in Fig. 6B, at the belt end, large gaps (air reservoirs) tends to be formed between the first belt layer 5 and the second belt layer 6 and between the second belt layer 6 and the additional layer 16.

In this regard, the above additional layer 16 can be a tire component such as, for example, a belt reinforcement layer or a rubber layer. In a case where the above additional layer 16 is not a tire component, the additional layer 16 can be peeled off as appropriate after the laminating step.

the above first rubber sheet and second rubber sheet can be, for example, a rectangle rubber sheet.

In the above laminating step, the first belt layer 5 and the second belt layer 6 are preferably laminated in such a way that the first rubber sheet 8 and the second rubber sheet 8.

In the production method according to the present embodiment, it is preferable that when the first belt layer 5 are the second belt layer 6 are laminated, an end of a first rubber sheet 8 positioned between the first belt layer 5 and the second belt layer 6 and an end of the second rubber sheet do not overlap with each other. In other words, a distance Lx' (distance in a tire width direction) between an end of a first rubber sheet 8 positioned between the first belt layer 5 and the second belt layer 6 and an end of the second rubber sheet (see Fig. 5A) is preferably greater than 0. As a result, the formation of a gap at a belt end can be further suppressed. In this case, an end of first rubber sheet 8 of the first belt layer 5 can be closer to the tire center portion, or as illustrated in Fig. 5A, an end of the second rubber sheet 8 of the second belt layer 6 can be closer to a tire center portion. In this regard, for the purpose of suppressing the formation of a gap more effectively, it is more preferable that, as illustrated in Fig. 5A, an end of the second rubber sheet 8 of the second belt layer 6 is closer to a tire center portion.

Specific production conditions regarding the production method according to the present embodiment are not limited in particular as long as the arrangement of the rubber sheet 8 around the first belt layer 5 and the second belt layer 6 is as described above and the configuration of a pneumatic tire 20 according to the above present embodiment is obtained.

For example, the lengths of the rubber portion A, the rubber portion B and the rubber portion C in the tire 20 after the laminating ($L_A$, $L_B$ and $L_C$) and the relationship between relative positions of these rubber portions are in correspondence with the lengths ($L_A$', $L_{B1}$' to $L_{B2}$', $L_C$') of the respective rubber sheet portions according to the production method according to the present embodiment, and therefore, can be appropriately adjusted by a persons skilled in the art.

For example, for the purpose of adjusting a spacing between the cords of the first belt layer 5 and the second belt layer 6 in the tire 20 according to the present embodiment (and hence, setting b/a to be 1.8 or more and 4.0 or less), it is possible to adjust, for example, the thickness of the first rubber sheet 8 covering an end of the first belt layer 5 described above and/or the thickness of the second rubber sheet 8 covering an end of the second belt layer 6 appropriately.


EXAMPLES

A tire will be described below in a more detailed manner by means of Example.

The belt edge separation durability and the rolling resistance were evaluated by using tires having the structure of the belts illustrated in the following Table 1 (using the cord classified into the UT grade defined in ISO 17832: 2009) and having the schematic structure of the belt end illustrated in Fig. 2A. In this regard, the tire is a pneumatic tire with a tire size of 265/65R18, and the cords in each of the belt layers was disposed to intersect with each other at an angle of ± 30° in relation to a tire circumferential direction.


<Belt edge separation durability>

After a tire of each example was degraded, the tire was subjected to the application of an inner pressure and attached on a test passenger vehicle. The tire was subjected to running on a BES dram with repeated application of a certain side force (SF). Then, the tire was disassembled to measure the length of the crack occurring at an end of the belt layer. The crack length in each example was compared to the crack length in the conventional example, and evaluated as B in a case where the difference of the crack length in each example with the crack length in the conventional example is 0.5 mm or less, and evaluated as A in a case where the crack length in each example is 1.0 mm or more shorter than the crack length in conventional example. The results are illustrated in Table 1.

In this regard, based on the tire structure of conventional example, when the thickness of the belt layer is smaller than that in conventional example, cracks tend to occur at the belt end and the belt edge separation durability tends to be deteriorated. Such a tendency is obvious for a person skilled in the art and therefore does not have to be measured by using a sample.

<Rolling resistance>

The inner pressure of a rim-assembled tire of each example was set at 210 kPa. According to ISO 28580, a drum test machine having an iron plate surface with a diameter of 1.7 m was used to measure the rolling resistance coefficient (N/kN) by rolling the tire at 80 km/h with a load mass of 80% based on the maximum load capability. The results are illustrated in Table 1. A smaller value means lower rolling resistance.

[Table 1]

| | | | Conventional example | Example 1 | Example 2 |
|---|---|---|---|---|---|
| Belt | | Cord structure | 1×5 (open structure) | 1×5 (open structure) | 1×5 (open structure) |
| | | Cord end count [twists/dm] | 75 | 75 | 75 |
| | | Cord diameter [mm] | 0.62 | 0.62 | 0.62 |
| | | Filament diameter [mm] | 0.225 | 0.225 | 0.225 |
| | | Thickness of the first belt layer and the second belt layer in the tire center portion [mm] | 1.08 | 0.85 | 0.85 |
| | | Distance of interface-cord of the first belt layer and the second belt layer in the tire center portion (c1, c2, c3, c4) [mm] | 0.22 | 0.11 | 0.11 |
| | | b/a | 1.23 | 1.95 | 3.81 |
| Belt edge separation durability | | | Reference | B | A |
| Rolling resistance coefficient [N/kN] | | | 7.0 | 6.8 | 6.9 |

From Table 1, it can be seen that the tires of Examples have a reduced low rolling resistance resulted from a thin belt layer, and also have the belt edge separation durability at a level equivalent to or higher than that of conventional example (that is, examples in which great the thickness of the belt layers are great).

INDUSTRIAL APPLICABILITY

Accordingly, it is possible to provide a pneumatic tire having reduced rolling resistance and good durability at a belt end.

In addition, it is possible to provide a method of producing a pneumatic tire by which the above-described pneumatic tire can be produced while suppressing the formation of a gap at a belt end.

REFERENCE SIGNS LIST

1        Tread portion
2        Sidewall portion
3        Bead portion
4        Carcass
5        First belt layer
6        Second belt layer
5A, 6A   Cords
5B, 6B   Coating rubbers

| 7 | Belt |
| 8 | End rubber (rubber sheet) |
| 8A | Rubber portion A |
| 8B | Rubber portion B |
| 8C | Rubber portion C |
| 10 | Bead core |
| 15 | Roll |
| 16 | Additional layer |
| 20 | Tire (pneumatic tire) |

**Claims**

1.  A pneumatic tire comprising a belt (7) including, in a tread portion (1), a first belt layer (5) and a second belt layer (6) laminated on a tire radially outer side of the first belt layer (5), wherein

    the first belt layer (5) and the second belt layer (6) is made up by embedding a plurality of cords (5A, 6A) in coating rubbers (5B, 6B),
    both of a thickness of the first belt layer (5) and a thickness of the second belt layer (6) in a tire center portion are 1.00 mm or less,
    when the shortest distance between the cord (6A) of the second belt layer (6) and the cord (5A) of the first belt layer (5) in the tire center portion is defined as a, and the shortest distance between a cord (6A) closest to an end of the second belt layer (6) and a cord (5A) of the first belt layer (5) is defined as b, b/a is 1.8 or more and 4.0 or less,
    at an end of the belt (7), an end rubber (8) is disposed on a tire radially inner side of the first belt layer (5), between the first belt layer (5) and the second belt layer (6), and on a tire radially outer side the second belt layer (6),
    when an end rubber (8) positioned on a tire radially inner side of the first belt layer (5) is defined as a rubber portion A (8A), an end rubber (8) positioned between the first belt layer (5) and the second belt layer (6) is defined as a rubber portion B (8B), and an end rubber (8) positioned on a tire radially outer side of the second belt layer (6) is defined as a rubber portion C (8C), the rubber portion B (8B) has the longest length in a direction toward the center portion and is closest to the tire center portion;
    wherein both of a distance between interface-cord (5A) of the first belt layer (5) and a distance between interface-cord (6A) of the second belt layer (6) in a tire center portion are 0.14 mm or less.

2.  The pneumatic tire according to claim 1, wherein when lengths of the rubber portion A (8A), the rubber portion B (8B) and the rubber portion C (8C) in a direction toward the tire center portion are defined as $L_A$, $L_B$ and $L_C$, respectively, $L_A/L_B$ is 0.5 or less and $L_C/L_B$ is 0.5 or less.

3.  The pneumatic tire according to any one of claims 1 or 2, wherein cords (5A, 6A) in the first belt layer (5) and the second belt layer (6) have a $1 \times N$ structure (N is an integer selected from 2 to 6) obtained by twisting N filaments together.

4.  The pneumatic tire according to claim 3, wherein an end count of the cord (5A, 6A) is 60/dm or more and 95/dm or less.

5.  The pneumatic tire according to claim 3 or 4, wherein a diameter of the cord (5A, 6A) is 0.5 mm or more and 1.0 mm or less.

6.  The pneumatic tire according to any one of claims 1 or 2, wherein cords (5A, 6A) in the first belt layer (5) and the second belt layer (6) is of monofilaments that are not twisted together and aligned in parallel.

7.  The pneumatic tire according to claim 6, wherein an end count of the cord (5A, 6A) is 180/dm or more and 240/dm or less.

8.  The pneumatic tire according to claim 6 or 7, wherein a diameter of the cord (5A, 6A) is 0.24 mm or more and 0.28 mm or less.

9.  The pneumatic tire according to any one of claims 1 to 8, wherein filaments constituting cords (5A, 6A) in the first belt layer (5) and the second belt layer (6) are classified into the UT grade defined in ISO 17832: 2009.

10. The method of producing a pneumatic tire according to any one of claims 1 to 9, comprising:

a step of laminating the first belt layer (5) and the second belt layer (6), wherein
prior to the laminating step, an end of the first belt layer (5) is covered with a first rubber sheet (8) and an end of the second belt layer (6) is covered with a second rubber sheet (8), and in doing so, both of the first rubber sheet (8) and the second rubber sheet (8) asymmetrically cover respective ends of the belt (7) layers in such a way that a length of a rubber sheet portion positioned on a side facing the other belt (7) layer when being subjected to the laminating is longer than a length of a rubber sheet portion positioned on the opposite side.

11. The method of producing a pneumatic tire according to claim 10, wherein an end of the first rubber sheet (8) positioned between the first belt layer (5) and the second belt layer (6) and an end of the second rubber sheet (8) do not overlap with each other when the first belt layer (5) and the second belt layer (6) are laminated.

**Patentansprüche**

1. Luftreifen, umfassend einen Gürtel (7), der in einem Laufflächenabschnitt (1) eine erste Gürtelschicht (5) und eine zweite Gürtelschicht (6) einschließt, die auf einer radial äußeren Reifenseite der ersten Gürtelschicht (5) laminiert ist, wobei

   die erste Gürtelschicht (5) und die zweite Gürtelschicht (6) durch Einbetten einer Vielzahl von Kordfäden (5A, 6A) in Beschichtungsgummis (5B, 6B) gebildet sind,
   sowohl die Dicke der ersten Gürtelschicht (5) als auch die Dicke der zweiten Gürtelschicht (6) in einem mittleren Reifenabschnitt 1,00 mm oder weniger betragen,
   wenn der kürzeste Abstand zwischen dem Kordfaden (6A) der zweiten Gürtelschicht (6) und dem Kordfaden (5A) der ersten Gürtelschicht (5) im mittleren Reifenabschnitt als a definiert wird und der kürzeste Abstand zwischen einem Kordfaden (6A), der einem Ende der zweiten Gürtelschicht (6) am nächsten liegt, und einem Kordfaden (5A) der ersten Gürtelschicht (5) als b definiert wird, b/a 1,8 oder mehr und 4,0 oder weniger beträgt,
   an einem Ende des Gürtels (7) ein Endgummi (8) auf einer radial inneren Reifenseite des ersten Gürtels (5) zwischen der ersten Gürtelschicht (5) und dem zweiten Gürtel (6) sowie auf einer radial äußeren Reifenseite der zweiten Gürtelschicht (6) angeordnet ist,
   wenn ein Endgummi (8), das auf einer radial inneren Reifenseite der ersten Gürtelschicht (5) angeordnet ist, als Gummiabschnitt A (8A) definiert wird, ein Endgummi (8), das zwischen der ersten Gürtelschicht (5) und der zweiten Gürtelschicht (6) angeordnet ist, als Gummiabschnitt B (8B) definiert wird, und ein Endgummi (8), das auf einer radial äußeren Reifenseite der zweiten Gürtelschicht (6) angeordnet ist, als Gummiabschnitt C (8C) definiert wird, so weist der Gummiabschnitt B (8B) die größte Länge in Richtung des mittleren Abschnitts auf und liegt am nächsten zum mittleren Reifenabschnitt;
   wobei sowohl der Abstand zwischen den Grenzkordfäden (5A) der ersten Gürtelschicht (5) als auch der Abstand zwischen den Grenzkordfäden (6A) der zweiten Gürtelschicht (6) im Reifenmittelbereich 0,14 mm oder weniger betragen.

2. Luftreifen nach Anspruch 1, wobei, wenn die Längen des Gummiabschnitts A (8A), des Gummiabschnitts B (8B) und des Gummiabschnitts C (8C) in Richtung des mittleren Reifenabschnitts jeweils als $L_A$, $L_B$ und $L_C$ definiert werden, $L_A/L_B$ 0,5 oder weniger beträgt und $L_C/L_B$ 0,5 oder weniger beträgt.

3. Luftreifen nach einem der Ansprüche 1 oder 2, wobei die Kordfäden (5A, 6A) in der ersten Gürtelschicht (5) und der zweiten Gürtelschicht (6) eine 1×N-Struktur aufweisen (N ist eine ganze Zahl zwischen 2 und 6), die durch Verdrillen von N Filamenten miteinander erhalten wird.

4. Luftreifen nach Anspruch 3, wobei die Endzählung der Kordfäden (5A, 6A) 60/dm oder mehr und 95/dm oder weniger beträgt.

5. Luftreifen nach Anspruch 3 oder 4, wobei der Durchmesser der Kordfäden (5A, 6A) 0,5 mm oder mehr und 1,0 mm oder weniger beträgt.

6. Luftreifen nach einem der Ansprüche 1 oder 2, wobei die Kordfäden (5A, 6A) in der ersten Gürtelschicht (5) und der zweiten Gürtelschicht (6) aus Monofilamenten bestehen, die nicht miteinander verdrillt und parallel ausgerichtet sind.

7. Luftreifen nach Anspruch 6, wobei die Endzählung der Kordfäden (5A, 6A) 180/dm oder mehr und 240/dm oder weniger beträgt.

8. Luftreifen nach Anspruch 6 oder 7, wobei der Durchmesser der Kordfäden (5A, 6A) 0,24 mm oder mehr und 0,28 mm oder weniger beträgt.

9. Luftreifen nach einem der Ansprüche 1 bis 8, wobei die die Kordfäden (5A, 6A) in der ersten Gürtelschicht (5) und der zweiten Gürtelschicht (6) bildenden Filamente der in ISO 17832:2009 definierten UT-Klasse entsprechen.

10. Verfahren zur Herstellung eines Luftreifens nach einem der Ansprüche 1 bis 9, umfassend:

einen Schritt des Laminierens der ersten Gürtelschicht (5) und der zweiten Gürtelschicht (6), wobei vor dem Laminierschritt ein Ende der ersten Gummischicht (5) mit einer ersten Gummifolie (8) bedeckt wird und ein Ende der zweiten Gummischicht (6) mit einer zweiten Gummifolie (8) bedeckt wird, und dabei sowohl die erste Gummifolie (8) als auch die zweite Gummifolie (8) jeweilige Enden der Gürtelschichten (7) auf solche Weise asymmetrisch bedecken, dass die Länge eines Gummifolienabschnitts, der auf einer der anderen Gürtelschicht (7) zugewandten Seite angeordnet ist, beim Laminieren länger ist als die Länge eines Gummifolienabschnitts, der auf der gegenüberliegenden Seite angeordnet ist.

11. Verfahren zur Herstellung eines Luftreifens nach Anspruch 10, wobei sich ein Ende der ersten Gummifolie (8), die zwischen der ersten Gürtelschicht (5) und der zweiten Gürtelschicht (6) angeordnet ist, und ein Ende der zweiten Gummifolie (8) beim Laminieren der ersten Gürtelschicht (5) und der zweiten Gürtelschicht (6) nicht überlappen.

**Revendications**

1. Pneu pneumatique comprenant une nappe d'armature (7) incluant, dans une partie de bande de roulement (1), une première couche de nappe d'armature (5) et une seconde couche de nappe d'armature (6) stratifiée sur un côté radialement extérieur du pneu de la première couche de nappe d'armature (5), dans lequel

la première couche de nappe d'armature (5) et la seconde couche de nappe d'armature (6) sont constituées en intégrant une pluralité de câbles (5A, 6A) dans des caoutchoucs de revêtement (5B, 6B), une épaisseur de la première couche de nappe d'armature (5) et une épaisseur de la seconde couche de nappe d'armature (6) dans une partie centrale du pneu sont toutes deux 1,00 mm ou moins, lorsque la distance la plus courte entre le câble (6A) de la seconde couche de nappe d'armature (6) et le câble (5A) de la première couche de nappe d'armature (5) dans la partie centrale du pneu est définie comme a, et la distance la plus courte entre un câble (6A) le plus proche d'une extrémité de la seconde couche de nappe d'armature (6) et un câble (5A) de la première couche de nappe d'armature (5) est définie comme b, b/a est 1,8 ou plus et 4,0 ou moins, à une extrémité de la nappe d'armature (7), un caoutchouc d'extrémité (8) est disposé sur un côté radialement intérieur du pneu de la première couche de nappe d'armature (5), entre la première couche de nappe d'armature (5) et la seconde couche de nappe d'armature (6), et sur un côté radialement extérieur du pneu de la seconde couche de nappe d'armature (6), lorsqu'un caoutchouc d'extrémité (8) positionné sur un côté radialement intérieur du pneu de la première couche de nappe d'armature (5) est défini comme une partie en caoutchouc A (8A), un caoutchouc d'extrémité (8) positionné entre la première couche de nappe d'armature (5) et la seconde couche de nappe d'armature (6) est défini comme une partie en caoutchouc B (8B), et un caoutchouc d'extrémité (8) positionné sur un côté radialement extérieur du pneu de la seconde couche de nappe d'armature (6) est défini comme une partie en caoutchouc C (8C), la partie en caoutchouc B (8B) présente la plus grande longueur dans une direction vers la partie centrale et est la plus proche de la partie centrale du pneu ; dans lequel une distance interface-câble (5A) de la première couche de nappe d'armature (5) et une distance interface-câble (6A) de la seconde couche de nappe d'armature (6) dans une partie centrale du pneu sont toutes deux 0,14 mm ou moins.

2. Pneu pneumatique selon la revendication 1, dans lequel, lorsque des longueurs de la partie en caoutchouc A (8A), de la partie en caoutchouc B (8B) et de la partie en caoutchouc C (8C) dans une direction vers la partie centrale du pneu sont définies respectivement comme $L_A$, $L_B$ et $L_C$, $L_A/L_B$ est 0,5 ou moins et $L_C/L_B$ est 0,5 ou moins.

3. Pneu pneumatique selon l'une quelconque des revendications 1 et 2, dans lequel les câbles (5A, 6A) dans la première couche de nappe d'armature (5) et la seconde couche de nappe d'armature (6) présentent une structure $1 \times N$ (N est un entier choisi de 2 à 6) obtenue en torsadant N filaments ensemble.

**4.** Pneu pneumatique selon la revendication 3, dans lequel un nombre d'extrémités du câble (5A, 6A) est 60/dm ou plus et 95/dm ou moins.

**5.** Pneu pneumatique selon la revendication 3 ou 4, dans lequel un diamètre du câble (5A, 6A) est 0,5 mm ou plus et 1,0 mm ou moins.

**6.** Pneu pneumatique selon l'une quelconque des revendications 1 et 2, dans lequel les câbles (5A, 6A) dans la première couche de nappe d'armature (5) et la seconde couche de nappe d'armature (6) sont des monofilaments qui ne sont pas torsadés ensemble et alignés en parallèle.

**7.** Pneu pneumatique selon la revendication 6, dans lequel un nombre d'extrémités du câble (5A, 6A) est 180/dm ou plus et 240/dm ou moins.

**8.** Pneu pneumatique selon la revendication 6 ou 7, dans lequel un diamètre du câble (5A, 6A) est 0,24 mm ou plus et 0,28 mm ou moins.

**9.** Pneu pneumatique selon l'une quelconque des revendications 1 à 8, dans lequel les filaments constituant les câbles (5A, 6A) dans la première couche de nappe d'armature (5) et dans la seconde couche de nappe d'armature (6) sont classés dans la catégorie UT définie dans ISO 17832:2009.

**10.** Procédé de fabrication d'un pneu pneumatique selon l'une quelconque des revendications 1 à 9, comprenant :

une étape de stratification de la première couche de nappe d'armature (5) et de la seconde couche de nappe d'armature (6), dans lequel

avant l'étape de stratification, une extrémité de la première couche de nappe d'armature (5) est recouverte d'une première feuille de caoutchouc (8) et une extrémité de la seconde couche de nappe d'armature (6) est recouverte d'une seconde feuille de caoutchouc (8), et ce faisant, la première feuille de caoutchouc (8) et la seconde feuille de caoutchouc (8) recouvrent de manière asymétrique les extrémités respectives des couches de nappe d'armature (7) de telle sorte qu'une longueur d'une partie de feuille de caoutchouc positionnée d'un côté faisant face à l'autre couche de nappe d'armature (7) lorsqu'elle est soumise à la stratification soit plus grande qu'une longueur d'une partie de feuille de caoutchouc positionnée du côté opposé.

**11.** Procédé de fabrication d'un pneu pneumatique selon la revendication 10, dans lequel une extrémité de la première feuille de caoutchouc (8) positionnée entre la première couche de nappe d'armature (5) et la seconde couche de nappe d'armature (6) et une extrémité de la seconde feuille de caoutchouc (8) ne se chevauchent pas lorsque la première couche de nappe d'armature (5) et la seconde couche de nappe d'armature (6) sont stratifiées.

# FIG. 1

# FIG. 2A

To tire center portion

To bead portion

# FIG. 2B

To tire center portion

# FIG. 3

Tire center portion                    Belt end

# FIG. 4

# FIG. 5A

Direction of movement

# FIG. 5B

# FIG. 6A

Direction of movement

# FIG. 6B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010163055 A
- JP 2007302203 A
- JP 2008174135 A